(19) Europäisches Patentamt
European Patent Office
Office européen des brevets

(11) **EP 1 993 250 B1**

(12) **EUROPÄISCHE PATENTSCHRIFT**

(45) Veröffentlichungstag und Bekanntmachung des Hinweises auf die Patenterteilung:
**07.06.2017 Patentblatt 2017/23**

(51) Int Cl.:
***H04L 27/26*** *(2006.01)*

(21) Anmeldenummer: **08007127.7**

(22) Anmeldetag: **10.04.2008**

(54) **Verfahren und Vorrichtung zur Ermittlung einer ganzzahligen Trägerfrequenzabweichung in einem OFDM-Übertragungssystem mittels Referenzsymbolen**

Method and device for determining an integer carrier frequency deviation in an OFDM system by means of reference symbols

Procédé et dispositif d'établissement d'une déviation de fréquence porteuse en nombres entiers dans un système de transmission OFDM à l'aide de symboles de référence

(84) Benannte Vertragsstaaten:
**DE FR GB**

(30) Priorität: **15.05.2007 DE 102007022745**
**17.07.2007 DE 102007033286**

(43) Veröffentlichungstag der Anmeldung:
**19.11.2008 Patentblatt 2008/47**

(73) Patentinhaber: **Rohde & Schwarz GmbH & Co. KG**
**81671 München (DE)**

(72) Erfinder: **Galda, Dirk, Dr.**
**85540 Haar (DE)**

(74) Vertreter: **Körfer, Thomas et al**
**Mitscherlich PartmbB**
**Patent- und Rechtsanwälte**
**Sonnenstrasse 33**
**80331 München (DE)**

(56) Entgegenhaltungen:
**EP-A2- 1 480 401     US-A1- 2005 036 564**

- **EU-SUK SHIM ET AL: "OFDM Integer Frequency Offset Estimator in Rapidly Time-Varying Channels", COMMUNICATIONS, 2006 ASIA-PACIFIC CONFERENCE ON, IEEE, PI, 1. August 2006 (2006-08-01), Seiten 1-4, XP031024212, ISBN: 978-1-4244-0573-2**

EP 1 993 250 B1

**Beschreibung**

Die Erfindung betrifft ein Verfahren und eine Vorrichtung zur Ermittlung einer ganzzahligen Trägerfrequenzabweichung in einem OFDM-Übertragungssystem mittels Referenzsymbolen.

Eine notwendige Voraussetzung für den sicheren Betrieb eines OFDM-Übertragungssystems (Orthogonal-Frequency-Division-Multiplex), d. h. einem Mehrträger-Übertragungssystem mit orthogonalen Subträgern, ist eine exakte Synchronisierung der Trägerfrequenz zwischen Sender und Empfänger. Ist die Trägerfrequenz zwischen Sender und Empfänger nicht syn-chronisiert, so ist die Orthogonalität zwischen den ein-zelnen Subträgersignalen in den einzelnen Subkanälen des OFDM-Übertragungssystems gestört und Übersprechen zwischen den einzelnen Subkanälen - Inter-Carrier-Interference - mindert die Übertragungsqualität.

Für die Trägerfrequenzsynchronisierung, die somit einen wesentlichen Bestandteil eines OFDM-Übertragungssystems darstellt, wird üblicherweise die Ermittlung der Trägerfrequenzabweichung in zwei Schritten durchgeführt:

In einem ersten Schritt wird die fraktionale Trägerfrequenzabweichung, also der Anteil $\varepsilon\Delta f$ der Trägerfrequenzabweichung ermittelt, der kleiner als der Subträgerabstand $\Delta f$ des OFDM-Übertragungssystems ist (mit $|\varepsilon|<1/2$).

In einem zweiten Schritt wird die ganzzahlige Trägerfrequenzabweichung, also das ganzzahlige Vielfache $m\cdot\Delta f$ des Subträgerabstands $\Delta f$ des OFDM-Übertragungssystems ermittelt (mit $m \in N$).

Während, wie z. B. in der US 7,133,479 B2 gezeigt, die Ermittlung der fraktionalen Trägerfrequenzabweichung üblicherweise mittels Korrelationsanalyse im Zeitbereich bestimmt wird, erfolgt die Ermittlung der ganzzahligen Trägerfrequenz-abweichung über eine Korrelationsanalyse im Frequenzbe-reich.

Für die Ermittlung der ganzzahligen Trägerfrequenzabweichung im Frequenzbereich können prinzipiell die strukturellen Eigenschaften der einzelnen Subkanäle und deren OFDM-Symbole ausgenutzt werden:

- Struktur der mit Symbolen belegten Subkanäle und der nicht mit Symbolen belegten Subkanäle,
- Subkanäle mit Nutzdaten-Symbole,
- Subkanäle mit verstreuten und kontinuierlich verteilten Pilotsymbolen (Scattered and Continual Pilots),
- Subkanäle mit kontinuierlichen Referenzsymbolen (Reference Symbols),
- Signalisierungskanäle mit Signalisierungsinformationen tragenden TPS-Piloten (Transmission Parameter Signalling Pilots) und
- Subkanäle mit jeweils unterschiedlich modulierten OFDM-Symbolen

Der Stand der Technik bzgl. der ganzzahligen Frequenzsynchronisation nutzt insbesondere die Struktur mit belegten und unbelegten Subkanälen und die Struktur mit Pilotsymbolen aus.

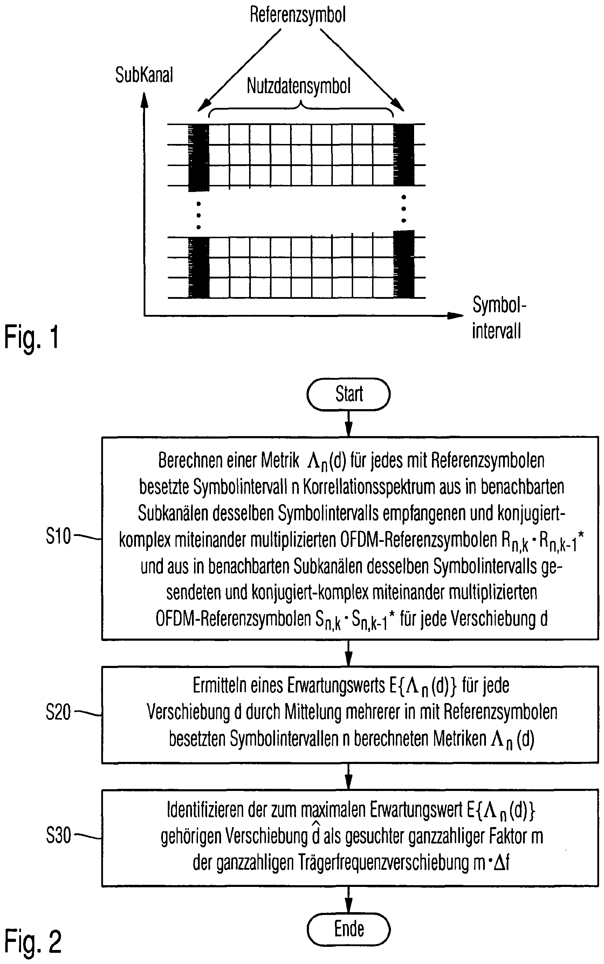

Daneben wird aber auch die Struktur mit Referenzsymbolen in differentiell modulierten Subträgern verwendet. Für eine differentielle Modulation in Zeitrichtung, d.h. die unabhängige differentielle Modulation aller Subträger, wird periodisch innerhalb eines Übertragungsrahmens ein dem Empfänger nach seinem Inhalt und Sendezeitpunkt bekanntes Referenzsymbol übertragen, wobei in jedem Subträger jeweils ein OFDM-Referenzsymbol eingebettet ist. Die Subträger sind dabei üblicherweise durch eine Pseudo-Zufallsfolge (PN-Sequenz) phasenmoduliert. Fig. 1 zeigt schematisch die Rahmenstruktur einer OFDM-Übertragung mit differenzieller Modulation in Zeitrichtung und periodischer Übertragung eines Referenzsymbols.

Üblicherweise werden zur ganzzahligen Frequenzsynchronisation basierend auf der Auswertung von einzelnen Referenzsymbolen Kreuzkorrelationsmetriken berechnet. Wird ein Referenzsymbol übertragen, so ist dem Empfänger der gesendete Inhalt des Referenzsymbols bekannt. Über die Korrelation des im Symbolintervall $n$ und im Subkanal $k$ gesendeten Referenzsymbol $S_{n,k}$ mit dem im selben Symbolintervall $n$ und im selben Subkanal $k$ empfangenen Referenzsymbol $R_{n,k}$ für verschiedene Verschiebungen $d$ zwischen gesendeter und empfangener Symbolsequenz kann der ganzzahlige Faktor $m$ der ganzzahligen Trägerfrequenzverschiebung $m\cdot\Delta f$ als diejenige Verschiebung $\hat{d}$ gemäß Gleichung (1) bestimmt werden, bei der die Korrelationsmetrik $\Lambda_n(d)$ gemäß Gleichung (2) maximal wird.

$$\hat{d} = \arg\max_d\{\Lambda(d)\} \tag{1}$$

$$\Lambda_n(d) = \left|\sum_{k=0}^{N_U-1} R_{n,k} \cdot S^*_{n,k-d}\right| \tag{2}$$

Dabei ist $N_U$ die Anzahl der genutzten Subkanäle. Durch die Multiplikation des Empfangssymbols mit dem konjugiertkomplexen Sendesymbol wird die Phasenmodulation entfernt und bleibt einzig die Phasenverzerrung des Sendesymbols durch den Übertragungskanal übrig. Für eine reine Phasenmodulation (M-PSK) des Referenzsymbols entspricht das Ergebnis einem berauschten Schätzwert $\tilde{H}_{n,k}$ des Kanalübertragungsfaktors $H_{n,k}$ gemäß Gleichung (3).

$$\widetilde{H}_{n,k} = R_{n,k} \cdot S^{*}_{n,k} = H_{n,k} + N_{n,k} \tag{3}$$

Für den Fall, dass das Referenzsymbol amplituden- und phasenmoduliert ist (M-QAM bzw. M-APSK), ergibt sich eine zusätzliche Amplitudenverzerrung des Kanalschätzwerts $\tilde{H}_{n,k}$, die von der Amplitude des Sendesymbols abhängig ist. Um dies zu vermeiden, sollte an Stelle der konjugiertkomplexen Multiplikation die Division durch das Sendesymbol gemäß Gleichung (4) treten.

$$\Lambda_n(d) = \left| \sum_{k=0}^{N_U-1} \frac{R_{n,k}}{S_{n,k-d}} \right| \tag{4}$$

Der Kanalübertragungsfaktor $H_{n,k}$ kann zum einen durch die Mehrwegeausbreitung im Kanal und zum anderen durch eine abweichende Positionierung des FFT-Fensters durch die OFDM-Symbolsynchronisation des Empfängers beeinflußt werden. Die Zeitverschiebung aufgrund einer fehlerhaften Positionierung des FFT-Fensters bedingt eine von der Frequenz und der Zeitverschiebung abhängige Phase des Kanalübertragungsfaktor $H_{n,k}$ im Frequenzbereich und damit einen linearen, von der Frequenz abhängigen Phasengang. Insbesondere eine nicht konstante Kanalphase kann zu einer Degradation bei einer ganzzahligen Frequenzsynchronisation führen.

Um den Einfluss des frequenzselektiven Kanals und des Phasengangs aufgrund der Positionierung des FFT-Fensters zu reduzieren, wird üblicherweise eine Unterteilung der Korrelationssumme in $L$ Teilsummen entsprechend Gleichung (5) durchgeführt.

$$\Lambda_n(d) = \sum_{m=0}^{M-1} \left| \sum_{k=m\cdot(N_U/L)}^{(m+1)\cdot(N_U/L)-1} R_{n,k} \cdot S^{*}_{n,k-d} \right| \tag{5}$$

Wird der Wert $L$ entsprechend der Kohärenzbandbreite des Kanals gewählt, so ändert sich die Phase des Kanals innerhalb der Teilsumme nur unwesentlich und es kommt in der einzelnen Teilsummen zu keiner destruktiven Überlagerung der einzelnen Summanden. Die geeignete Wahl des Parameters $L$ stellt dabei aber die Schwierigkeit des Verfahrens dar.

Bei einem weiteren Verfahren zur ganzzahligen Frequenzsynchronisation unter Berücksichtigung des Kanaleinflusses wird nach der Multiplikation des Empfangssignals mit der konjugiert komplexen Sendesequenz an Stelle der Summation eine inverse Fourier-Transformation durchgeführt und der Maximalbetrag des Transformationsergebnisses - entspricht der Ermittlung des maximalen Peaks der zum Schätzwert $\tilde{H}_{n,k}$ des Kanalübertragungsfaktors $H_{n,k}$ korrespondierenden Schätzung $\tilde{h}$ der Kanalimpulsantwort $h$ - ermittelt. Die Transformation und die Bestimmung des Maximums des Schätzwerts $\tilde{h}$ der Kanalimpulsantwort $h$ werden für verschiedene Verschiebungen $d$ zwischen gesendeter und empfangener Sequenz des Referenzsymbols durchgeführt. Der ganzzahlige Faktor $m$ der Trägerfrequenzverschiebung $m\cdot\Delta f$ ergibt sich damit als Verschiebung $\hat{d}$ mit maximalem Betrag gemäß Gleichung (6).

$$\hat{d} = \arg\max_d \left\{ \max_n \left\{ \left| \sum_{k=0}^{N_U-1} R_{n,k} \cdot S^{*}_{n,k-d} \cdot e^{j2\pi kn/N_C} \right| \right\} \right\} \tag{6}$$

Die Summe beschreibt die inverse Fourier-Transformation über insgesamt $N_C$ Punkte für die belegten Subträger. Falls die betrachtete Verschiebung $\hat{d}$ dem ganzzahligen Vielfachen $m$ der Trägerfrequenzverschiebung $m\cdot\Delta f$ entspricht, wird durch die inverse Fourier-Transformation die Impulsantwort des Kanals berechnet, andernfalls ergibt die Transformation ein Rauschsignal. Durch die Bestimmung des Betragsmaximums nach der Berechnung der inversen Fourier-Transformation erfolgt ein Ausgleich des linearen Phasengangs des Kanals, da der Betrag unabhängig von der Position des Maximums betrachtet wird. Das Verfahren ist robust gegenüber Kanaleinflüssen, es hat jedoch eine hohe Komplexität, da für jede mögliche Verschiebung eine eigene inverse Fourier-Transformation durchgeführt werden muss. Aus der Veröffentlichung von EU-SUK SHIM ET AL: "OFDM Integer Frequency Offset Estimator in Rapidly Time-Varying Channels",COMMUNICATIONS, 2006 ASIA-PACIFIC CONFERENCE ON, IEEE, PI, 1. August 2006 ist ein Verfahren bekannt, bei dem ein Korrelationskoeffizient zwischen benachbarten Unterträgern ermittelt wird, und der Frequenzversatz aus dem Maximalwert geschätzt wird.

Aufgabe der Erfindung ist es deshalb, ein Verfahren und eine Vorrichtung zur ganzzahligen Frequenzsynchronisation mittels Referenzsymbolen zu schaffen, das einerseits eine hohe Robustheit gegenüber Kanaleinflüssen - korrekte Entzerrung der phasen- und evtl. amplitudenverzerrten OFDM-Referenzsymbole - aufweist und andererseits durch eine einfache Realisierung gekennzeichnet ist.

Die Aufgabe wird durch das erfindungsgemäße Verfahren zur

Ermittlung einer Trägerfrequenzabweichung bei einem phasenmodulierten OFDM-Übertragungssystem mit den Merkmalen des Anspruchs 1, durch das erfindungsgemäße Verfahren zur Ermittlung einer Trägerfrequenzabweichung bei einem amplitudenmodulierten OFDM-Übertragungssystem mit den Merkmalen des Anspruchs 2, durch die erfindungsgemäße Vorrichtung zur Ermittlung einer Trägerfrequenzabweichung bei einem phasenmodulierten OFDM-Übertragungssystem mit den Merkmalen des Anspruchs 3 und durch die erfindungsgemäße Vorrichtung zur Ermittlung einer Trägerfrequenzabweichung bei einem phasenmodulierten OFDM-Übertragungssystem mit den Merkmalen des Anspruchs 4 gelöst.

Erfindungsgemäß wird bei einem phasenmodulierten OFDM-Signal das in der Metrik $\Lambda_n(d)$ enthaltene Korrelationsspektrum aus den konjugiert-komplex multiplizierten, im Symbolintervall $n$ und im Subkanal $k$ gesendeten und empfangenen OFDM-Referenzsymbolen $S_{n,k}$ und $R_{n,k}$ gemäß Gleichung (2) jeweils um die konjugiert-komplex multiplizierten, im selben Symbolintervall $n$ und im benachbarten Subkanal $k$ -1 gesendeten und empfangenen OFDM-Referenzsymbole $S^*_{n,k-1}$ und $R_{n,k-1}$ erweitert.

Auf diese Weise setzt sich die Metrik $\Lambda_n(d)$ im Fall, dass der ganzzahlige Faktor $m$ der gesuchten Trägerfrequenzverschiebung $m \cdot \Delta f$ der Verschiebung $d$ der Metrik $\Lambda_n(d)$ entspricht, aus den konjugiert-komplex multiplizierten Schätzwerten $\tilde{H}_{n,k}$ und $\tilde{H}_{n,k-1}$ der Kanalübertragungsfaktoren $H_{n,k}$ und $H_{n,k-1}$ in den benachbarten Subkanälen $k$ und $k$-1 zusammen. Unter der Annahme, dass die Kanalübertragungsfaktoren $H_{n,k}$ und $H_{n,k-1}$ in benachbarten Subkanälen $k$ und $k$ -1 stark korrelieren, ist der Schätzwert $\tilde{H}_{n,k}$ des Kanalübertragungsfaktors $H_{n,k}$ näherungsweise identisch zum Schätzwert $\tilde{H}_{n,k-1}$ des Kanalübertragungsfaktors $H_{n,k-1}$ im benachbarten Subkanal, so dass der Erwartungswswert $E\{\Lambda_n(d)\}$ der Metrik $\Lambda_n(d)$ der konjugiert-komplexen Multiplikation des Schätzwerts $\tilde{H}_{n,k}$ des Kanalübertragungsfaktors $H_{n,k}$ - entsprechend einer Betragsbildung und damit einer Phasenentzerrung des Schätzwerts $\tilde{H}_{n,k}$ des Kanalübertragungsfaktors $H_{n,k}$ - und somit der Kanalleistung $\sigma^2_{|\tilde{H}|}{}^2$ von insgesamt $N_U$-1 Subkanälen entspricht.

Im Fall, dass der ganzzahlige Faktor $m$ der gesuchten Trägerfrequenzverschiebung $m \cdot \Delta f$ der Verschiebung $d$ der Metrik $\Lambda_n(d)$ nicht entspricht, ergibt sich ein Erwartungswswert $E\{\Lambda_n(d)\}$ der Metrik $\Lambda_n(d)$ von Null, da die im Korrelationsspektrum der Metrik $\Lambda_n(d)$ multiplikativ miteinander verknüpften und in unterschiedlichen Subkanälen gesendeten und empfangenen OFDM-Referenzsymbole zueinander unkorreliert sind.

Somit liegt eine erfindungsgemäße Metrik $\Lambda_n(d)$ vor, die ein eindeutiges Kriterium zur Identifizierung des ganzzahligen Faktors m der gesuchten Trägerfrequenzverschiebung $m \cdot \Delta f$ darstellt und gleichzeitig eine Entzerrung der empfangenen OFDM-Referenzsymbole von den Phasenverzerrungen des OFDM-Übertragungskanals, insbesondere eine Entzerrung der empfangenen OFDM-Referenzsymbole von einem durch fehlerhafte FFT-Fensterung bedingten linearen Phasengang, verwirklicht.

Im Falle von zusätzlich amplitudenmodulierten OFDM-Referenzsymbolen wird das in der Metrik $\Lambda_n(d)$ enthaltene Korrelationsspektrum aus den im Symbolintervall $n$ und im Subkanal $k$ empfangenen und invertierten gesendeten OFDM-Referenzsymbolen $R_{n,k}$ und $(S_{n,k})^{-1}$ gemäß Gleichung (4) jeweils um die konjugiert-komplexen, im selben Symbolintervall $n$ und im benachbarten Subkanal $k$ -1 gesendeten und invertierten, empfangenen OFDM-Referenzsymbole $R^*_{n,k-1}$ und $(S^*_{n,k-1})^{-1}$ erweitert. Auf diese erfolgt zusätzlich zur Phasenentzerrung eine Amplitudenentzerrung der empfangenen OFDM-Referenzsymbole von der Amplitudenverzerrung des OFDM-Übertragungskanals.

Im Folgenden werden Ausführungsbeispiele des erfindungsgemäßen Verfahrens und der erfindungsgemäßen Vorrichtung zur Ermittlung einer ganzzahligen Trägerfrequenzabweichung in einem OFDM-Übertragungssystem mittels Referenzsymbolen im Detail erläutert. Die Figuren der Zeichnung zeigen:

Fig. 1    ein Frequenz-Zeit-Diagramm eines OFDM-Übertragungsrahmens mit Referenzsymbolen,

Fig. 2    ein Flussdiagramm des erfindungsgemäßen Verfahrens zur Ermittlung der ganzzahligen Trägerfrequenzabweichung in einem phasen-modulierten OFDM-Übertragungssystem mittels Referenzsymbolen,

Fig. 3    ein Flussdiagramm des erfindungsgemäßen Verfahrens zur Ermittlung der ganzzahligen Trägerfrequenzabweichung in einem amplitudenmodulierten OFDM-Übertragungssystem mittels Referenzsymbolen,

Fig. 4    ein Blockdiagramm einer erfindungsgemäßen Vorrichtung zur Ermittlung der ganzzahligen Trägerfrequenzabweichung in einem phasen-modulierten OFDM-Übertragungssystem mittels Referenzsymbolen und

Fig. 5    ein Blockdiagramm einer erfindungsgemäßen Vorrichtung zur Ermittlung der ganzzahligen Trägerfrequenzabweichung in einem amplitudenenmodulierten OFDM-Übertragungssystem mittels Referenzsymbolen.

Bevor die beiden Ausführungsformen des erfindungsgemäßen Verfahrens und der erfindungsgemäßen Vorrichtung zur Ermittlung der ganzzahligen Trägerfrequenzabweichung in einem OFDM-Übertragungssystem anhand der Fig. 2 bis 5 im Detail erläutert werden, werden im folgenden die für das Verständnis der Erfindung erforderlichen mathematischen Grundlagen aufgezeigt:

Die in den einzelnen Subkanälen $k$ und in einzelnen Symbolintervallen $n$ gesendeten OFDM-Referenzsymbole $S_{n,k}$ sind zueinander unkorreliert. Somit ergibt der Erwartungswert der konjugiert-komplex miteinander multiplizierten und in unterschiedlichen Subkanälen $k$ und $l$ gesendeten OFDM-Referenzsymbole $S_{n,k}$ und $S_{n,l}$ bei einer Mittelung über die einzelnen Symbolintervalle $n$ gemäß Gleichung (7) einen Wert von Null.

$$E\left\{S_{n,k} \cdot S^{*}_{n,l}\right\} = 0 \qquad\qquad \forall k \neq l \qquad\qquad (7)$$

Der dazu korrespondierende Erwartungswert der konjugiertkomplex miteinander multiplizierten, in einem Subkanal $k$ gesendeten OFDM-Referenzsymbole $S_{n,k}$ und in einem dazu unterschiedlichen Subkanal $l$ empfangenen OFDM-Referenzsymbole $R_{n,l}$ ergibt bei einer Mittelung über die einzelnen Symbolintervalle $n$ gemäß Gleichung (8) ebenfalls einen Wert von Null.

$$E\left\{S_{n,k} \cdot R^{*}_{n,l}\right\} = 0 \qquad\qquad \forall k \neq l \qquad\qquad (8)$$

Der Erwartungswert der über jedes Symbolintervall $n$ gemittelten und konjugiert-komplex miteinander multiplizierten und in einem einzigen Subkanal $k$ gesendeten OFDM-Referenzsymbole $S_{n,k}$ ergibt bei einer Mittelung über die einzelnen Symbolintervalle $n$ gemäß Gleichung (9) das gesendete OFDM-Symbol $|S_{n,k}|^2$ im Betragsquadrat.

$$E\left\{S_{n,k} \cdot S^{*}_{n,k}\right\} = \left|S_{n,k}\right|^{2} \qquad\qquad \forall k \qquad\qquad (9)$$

Der korrespondierende Erwartungswert der konjugiert-komplex multiplizierten in einem einzigen Subkanal $k$ gesendeten OFDM-Referenzsymbole $S_{n,k}$ und empfangenen OFDM-Referenzsymbole $R_{n,k}$ ergibt bei einer Mittelung über die einzelnen Symbolintervalle $n$ und in Anlehnung an Gleichung (3) den Schätzwert $\tilde{H}_{n,k}$ des Kanalübertragungsfaktors $H_{n,k}$ gemäß Gleichung (10).

$$E\left\{S_{n,k} \cdot R^{*}_{n,k}\right\} = E\left\{\tilde{H}_{n,k}\right\} = \left|S_{n,k}\right|^{2} / \sigma_{\tilde{H}}^{2} \qquad\qquad \forall k \qquad\qquad (10)$$

Mit den differierenden Ergebnissen der Gleichungen (8) und (10) liegt ein Unterscheidungskriterium für eine Metrik zur Bestimmung des Vorliegens bzw. Nichtvorliegens einer ganzzahligen Trägerfrequenzverschiebung in Höhe des ganzzahligen Vielfachen $m$ des Trägerabstands $\Delta f$ vor.

Hierzu wird ein als Metrik $\Lambda_n(d)$ dienendes, von der Verschiebung $d$ abhängiges Kreuzkorrelationsspektrum aus den konjugiert-komplex miteinander multiplizierten gesendeten OFDM-Referenzsymbolen $S_{n,k}$ und empfangenen OFDM-Referenzsymbolen $R_{n,k}$ und gesendeten OFDM-Referenzsymbolen $S_{n,k}$ entsprechend Gleichung (11) gebildet.

$$\Lambda_{n}(d) = \sum_{k=0}^{N_{U}-1} S_{n,k} \cdot R^{*}_{n,k-d} \qquad\qquad (11)$$

Entspricht das ganzzahlige Vielfache m der Trägerfrequenzverschiebung $m \cdot \Delta f$ der Verschiebung $d$ des Kreuzkorrelationsspektrums, so wird im Subkanal $k - d$ das zum im Subkanal $k$ gesendete OFDM-Referenzsymbol $S_{n,k}$ korrespondierende Referenzsymbol $R_{n,k}$ empfangen und der Erwartungswert $E\{\Lambda_n(d)\}$ der Metrik $\Lambda_n(d)$ aus Gleichung (11) bei einer Mittelung über die einzelnen Symbolintervalle $n$ geht in eine der Gleichung (10) entsprechende Gleichung (12) über.

$$E\{\Lambda_n(d)\}_{d=m} = E\left\{\sum_{k=0}^{N_U-1} S_{n,k} \cdot R^*_{n,k-d}\right\}_{d=m} \triangleq E\left\{\sum_{k=0}^{N_U-1} S_{n,k} \cdot R^*_{n,k}\right\} = E\left\{\sum_{k=0}^{N_U-1} \widetilde{H}_{n,k}\right\} = \sum_{k=0}^{N_U-1} \sigma_{\widetilde{H}_k}$$

$$\forall k \qquad (12)$$

Entspricht dagegen das ganzzahlige Vielfache $m$ der Trägerfrequenzverschiebung $m\cdot\Delta f$ nicht der Verschiebung $d$ des Kreuzkorrelationsspektrums, so wird im Subkanal $k - d$ nicht das zum im Subkanal $k$ gesendete OFDM-Referenzsymbol $S_{n,k}$ korrespondierende Referenzsymbol $R_{n,k}$ empfangen und der Erwartungswert $E\{\Lambda_n(d)\}$ der Metrik $\Lambda_n(d)$ aus Gleichung (11) bei einer Mittelung über die einzelnen Symbolintervalle $n$ geht in eine der Gleichung (8) entsprechende Gleichung (13) über.

$$E\{\Lambda_n(d)\}_{d\neq m} = E\left\{\sum_{k=0}^{N_U-1} S_{n,k} \cdot R^*_{n,k-d}\right\}_{d\neq m} = 0 \qquad \forall k \qquad (13)$$

Der Erwartungswert $E\{\Lambda_n(d)\}$ der Metrik $\Lambda_n(d)$ bildet aufgrund unterscheidbarer Werte für die beiden Fälle einer zum ganzzahligen Vielfachen $m$ der Trägerfrequenzverschiebung $m\cdot\Delta f$ identischen und differierenden Verschiebung $d$ entsprechend Gleichung (12) und (13) ein Unterscheidungskriterium. Somit ergibt die zum maximalen Erwartungswert $E\{\Lambda_n(d)\}$ der Metrik $\Lambda_n(d)$ gehörige *Verschiebung $\hat{d}$* das gesuchte ganzzahlige Vielfache $m$ der Trägerfrequenzverschiebung $m\cdot\Delta f$ gemäß Gleichung (14).

$$m = \hat{d} = \arg\max_d \{E\{\Lambda_n(d)\}\} \qquad (14)$$

Da auf Grund von Verzerrungen im OFDM-Übertragungskanal das im Subkanal $k$ und im Symbolintervall $n$ gesendete OFDM-Referenzsymbol $S_{n,k}$ mit dem korrespondierenden empfangenen OFDM-Referenzsymbol $R_{n,k}$ nicht übereinstimmt, ist der Erwartungswert $E\{\Lambda_n(d)\}$ der Metrik $\Lambda_n(d)$ um die Verzerrung des OFDM-Übertragungskanals verfälscht und die Maximalwertbildung gemäß Gleichung (14) führt u.U. zu keinem korrekten Wert der ganzzahligen Trägerfrequenzverschiebung $m\cdot\Delta f$.

Um den Einfluß der Kanalverzerrung zu kompensieren, ist in die Berechnung der Metrik $\Lambda_n(d)$ eine Kanalentzerrung zu integrieren. Bei einem rein phasenmodulierten OFDM-Signal ist hierbei die Phasenverzerrung des OFDM-Übertragungskanals zu berücksichtigen. Eine Phasenentzerrung des Übertragungskanals wird in üblicher Weise durch konjugiertkomplexe Multiplikation des jeweiligen Kanalübertragungsfaktors $H_{n,k}$ erzielt.

Wird hierzu ausgehend von Gleichung (12) für den Fall, dass das ganzzahlige Vielfache $m$ der Trägerfrequenzverschiebung $m\cdot\Delta f$ der Verschiebung $d$ des Kreuzkorrelationsspektrums der Metrik $\Lambda_n(d)$ entspricht, die Metrik $\Lambda_n(d)$ um den konjugiert-komplexen Faktor $(S_{n,k}\cdot R^*_{n,k-d})^*$ erweitert, so ergibt sich für den Erwartungswert $E\{\Lambda_n(d)\}$ der Metrik $\Lambda_n(d)$ die mathematische Beziehung in Gleichung (15).

$$E\{\Lambda_n(d)\}_{d=m} = E\left\{\sum_{k=0}^{N_U-1} (S_{n,k} \cdot R^*_{n,k-d}) \cdot (S_{n,k} \cdot R^*_{n,k-d})^*\right\}_{d=m} \triangleq$$

$$\triangleq E\left\{\sum_{k=0}^{N_U-1} (S_{n,k} \cdot R^*_{n,k}) \cdot (S_{n,k} \cdot R^*_{n,k})^*\right\} = E\left\{\sum_{k=0}^{N_U-1} \widetilde{H}_{n,k} \cdot \widetilde{H}^*_{n,k}\right\} = \sum_{k=0}^{N_U-1} \sigma^2_{|\widetilde{H}_k|^2}$$

$$\forall k \qquad (15)$$

Im Fall, dass das ganzzahlige Vielfache m der Trägerfrequenzverschiebung $m\cdot\Delta f$ der Verschiebung $d$ des

Kreuzkorrelationsspektrums der Metrik $\Lambda_n(d)$ nicht entspricht, wird analog ausgehend von Gleichung (13) die Metrik $\Lambda_n(d)$ um den konjugiert-komplexen Faktor $(S_{n,k} \cdot R^*_{n,k-d})^*$ erweitert, so dass sich für den Erwartungswert $E\{\Lambda_n(d)\}$ der Metrik $\Lambda_n(d)$ die mathematische Beziehung in Gleichung (16) ergibt.

$$E\{\Lambda_n(d)\}_{d \neq m} = E\left\{ \sum_{k=0}^{N_U-1} (S_{n,k} \cdot R^*_{n,k-d}) \cdot (S_{n,k} \cdot R^*_{n,k-d})^* \right\}_{d \neq m} =$$

$$= E\left\{ \sum_{k=0}^{N_U-1} |S_{n,k}|^2 \cdot |R_{n,k-d}|^2 \right\}_{d \neq m} \neq 0 \qquad \forall k \qquad (16)$$

Da der Erwartungswert $E\{\Lambda_n(d)\}$ der Metrik $\Lambda_n(d)$ im letzteren Fall aufgrund der Betragsquadrierung einen positiven, i.a. von Null verschiedenen Wert und damit keinen zum ersten Fall eindeutig unterscheidbaren Wert aufweist, ist diese Art der Phasenentzerrung des Kanalübertragungsfaktors $H_{n,k}$ nicht geeignet.

Anstelle der Erweiterung der Metrik $\Lambda_n(d)$ um den konjugiert-komplexen Faktor $(S_{n,k} \cdot R^*_{n,k-d})^*$ wird die Metrik $\Lambda_n(d)$ erfindungsgemäß gemäß Gleichung (17) um den konjugiertkomplexen Faktor $(S_{n,k-1} \cdot R^*_{n,k-1-d})^*$ zur erfindungsgemäßen Phasenentzerrung des Kanalübertragungsfaktors $H_{n,k}$ erweitert:

$$\Lambda_n(d) = \sum_{k=1}^{N_U-1} (S_{n,k} \cdot R^*_{n,k-d}) \cdot (S_{n,k-1} \cdot R^*_{n,k-1-d})^* \qquad (17)$$

Für den Fall, dass das ganzzahlige Vielfache $m$ der Trägerfrequenzverschiebung $m \cdot \Delta f$ der Verschiebung $d$ des Kreuzkorrelationsspektrums der Metrik $\Lambda_n(d)$ entspricht, ergibt sich bei einer Erweiterung der Metrik $\Lambda_n(d)$ um den konjugiert-komplexen Faktor $(S_{n,k-1} \cdot R^*_{n,k-1-d})^*$ die mathematische Beziehung für den Erwartungswert $E\{\Lambda_n(d)\}_{d=m}$ der Metrik $\Lambda_n(d)$ in Gleichung (18).

$$E\{\Lambda_n(d)\}_{d=m} = E\left\{ \sum_{k=1}^{N_U-1} (S_{n,k} \cdot R^*_{n,k-d}) \cdot (S_{n,k-1} \cdot R^*_{n,k-1-d})^* \right\}_{d=m} \triangleq$$

$$\triangleq E\left\{ \sum_{k=1}^{N_U-1} (S_{n,k} \cdot R^*_{n,k}) \cdot (S_{n,k-1} \cdot R^*_{n,k-1})^* \right\} = E\left\{ \sum_{k=1}^{N_U-1} \widetilde{H}_{n,k} \cdot \widetilde{H}_{n,k-1}^* \right\}$$

$$\forall k \qquad (18)$$

Geht man ferner davon aus, dass die Schätzwerte $\tilde{H}_{n,k}$ und $\tilde{H}_{n,k-1}$ der Kanalübertragungsfaktoren $H_{n,k}$ und $H_{n,k-1}$ in benachbarten Subkanälen $k$ und $k-1$ in einem OFDM-Übertragungssystem aufgrund der begrenzten relativen Länge des Guard-Intervalls $T_G$ bezogen auf die OFDM-Symboldauer $T_S$ stark korrelieren, so entspricht der Erwartungswert der konjugiert-komplex multiplizierten Schätzwerte $\tilde{H}_{n,k}$ und $\tilde{H}_{n,k-1}$ der Kanalübertragungsfaktoren $H_{n,k}$ und $H_{n,k-1}$ bei einer Mittelung über die einzelnen Symbolintervalle $n$ gemäß Gleichung (19) näherungsweise dem Erwartungswert des konjugiert-komplex multiplizierten Schätzwerts $\tilde{H}_{n,k}$ des Kanalübertragungsfaktors $H_{n,k}$

$$E\{\Lambda_n(d)\}_{d=m} = E\left\{ \sum_{k=1}^{N_U-1} \widetilde{H}_{n,k} \cdot \widetilde{H}^*_{n,k-1} \right\} \approx E\left\{ \sum_{k=1}^{N_U-1} \widetilde{H}_{n,k} \cdot \widetilde{H}^*_{n,k} \right\} = (N_U - 1) \cdot \sigma^2_{|\tilde{H}|^2}$$

$$\forall k \qquad (19)$$

Bei identischer Kanalleistung $\sigma^2_{|\tilde{H}|^2}$ in jedem einzelnen Subkanal ergibt sich der Erwartungswert $E\{\Lambda_n(d)\}_{d=m}$ der Metrik $\Lambda_n(d)$ aus dem $N_U$-1-fachen der Kanalleistung $\sigma^2_{|\tilde{H}|^2}$ in jedem einzelnen Subkanal. Üblicherweise wird von einem normierten Kanal mit $\sigma^2_{|\tilde{H}|^2} = 1$ ausgegangen.

Für den Fall, dass das ganzzahlige Vielfache $m$ der Trägerfrequenzverschiebung $m \cdot \Delta f$ der Verschiebung $d$ des Kreuzkorrelationsspektrums der Metrik $\Lambda_n(d)$ nicht entspricht, ergibt sich bei einer Erweiterung der Metrik $\Lambda_n(d)$ um den konjugiert-komplexen Faktor $(S_{n,k-1} \cdot R^*_{n,k-1-d})^*$ die mathematische Beziehung für den Erwartungswert $E\{\Lambda_n(d)\}_{d \neq m}$ der

Metrik $\Lambda_n(d)$ in Gleichung (20).

$$E\{\Lambda_n(d)\}_{d \neq m} = E\left\{\sum_{k=1}^{N_U-1}(S_{n,k} \cdot R^*_{n,k-d}) \cdot (S_{n,k-1} \cdot R^*_{n,k-1-d})^*\right\}_{d \neq m} =$$

$$E\left\{\sum_{k=1}^{N_U-1}(S_{n,k} \cdot S^*_{n,k-1}) \cdot (R_{n,k-d} \cdot R^*_{n,k-1-d})^*\right\}_{d \neq m} = 0 \qquad \forall k \qquad (20)$$

Auf Grund der Unkorreliertheit der in benachbarten Subkanälen $k$ und $k$-1 gesendeten OFDM-Referenzsymbole $S_{n,k}$ und $S^*_{n,k-1}$ und der in benacharten Subkanälen $k$-$d$ und $k$-1-$d$ empfangenen OFDM-Referenzsymbole $R_{n,k-d}$ und $R^*_{n,k-1-d}$ ergibt sich in Anlehnung an Gleichung (7) für den Erwartungswert $E\{\Lambda_n(d)\}_{d \neq m}$ der Metrik $\Lambda_n(d)$ ein Wert von Null.

Somit liegt erfindungsgemäß eine Metrik $\Lambda_n(d)$ mit integrierter Phasenentzerrung des OFDM-Übertragungskanals vor, deren Erwartungswert $E\{\Lambda_n(d)\}$ für die beiden Fälle einer zum ganzzahligen Vielfachen $m$ der Trägerfrequenzverschiebung $m \cdot \Delta f$ identischen und differierenden Verschiebung $d$ entsprechend Gleichung (18) bzw. (19) und (20) ein eindeutiges Unterscheidungskriterium darstellt.

Liegt ein phasen- und amplitudenmoduliertes OFDM-Signal vor, so weist der Schätzwert $\tilde{H}_{n,k}$ des Kanalübertragungsfaktors $H_{n,k}$ in Anlehnung an Gleichung (3) eine von der modulierten Amplitude des gesendeten OFDM-Referenzsymbols $S_{n,k}$ abhängige Amplitudenverzerrung auf. Somit ist neben der Phasenentzerrung auch eine Amplitudenverzerrung des Schätzwert $\tilde{H}_{n,k}$ des Kanalübertragungsfaktors $H_{n,k}$ in die Metrik $\Lambda_n(d)$ zu integrieren. Hierzu ist in Anlehnung an Gleichung (4) das aus der konjugiert-komplexen Multiplikation des gesendeten OFDM-Referenzsymbols $S_{n,k}$ mit dem korrespondierenden empfangenen OFDM-Referenzsymbol $R_{n,k}$ bestehende Korrelationsspektrum der Metrik $\Lambda_n(d)$ durch ein aus der konjugiert-komplexen Division des gesendeten OFDM-Referenzsymbols $S_{n,k}$ mit dem korrespondierenden empfangenen OFDM-Referenzsymbol $R_{n,k}$ bestehende Korrelationsspektrum gemäß Gleichung (21) zu ersetzen.

$$\Lambda_n(d) = \sum_{k=1}^{N_U-1}\left(\frac{R_k}{S^*_{k-d}}\right) \cdot \left(\frac{R_{k-1}}{S^*_{k-1-d}}\right)^* \qquad (21)$$

Der ganzzahlige Faktor $m$ der Trägerfrequenzverschiebung $m \cdot \Delta f$ ergibt sich in Anlehnung an Gleichung (14) aus dem zum maximal ermittelten Erwartungswert $E\{\Lambda_n(d)\}$ der gemäß Gleichung (20) berechneten Metrik $\Lambda_n(d)$ gehörigen Verschiebung $\hat{d}$.

Im folgenden wird das erfindungsgemäße Verfahren zur Ermittlung einer ganzzahligen Trägerfrequenzabweichung in einem phasenmodulierten OFDM-Übertragungssystem mittels Referenzsymbolen anhand des Flußdiagramms in Fig. 2 beschrieben.

In einem ersten Verfahrenschritt S10 werden in jeweils benachbarten Subkanälen $k$ und $k$-1 und in für OFDM-Referenzsymbole vorgesehenen Symbolintervallen $n$ gesendete bzw. empfangene OFDM-Referenzsymbole $S_{n,k}$ und $S_{n,k-1}$ bzw. $R_{n,k}$ und $R_{n,k-1}$ jeweils konjugiert-komplex miteinander multipliziert. Diese für zwei benachbarte Subkanäle $k$ und $k$-1 jeweils konjugiert-komplex miteinander multiplizierten, gesendeten und empfangenen OFDM-Referenzsymbole $S_{n,k} \cdot S_{n,k-1}^*$ und $R_{n,k} \cdot R_{n,k-1}^*$ werden zur Berechnung eines als Metrik $\Lambda_n(d)$ dienenden Korrelationsspektrums gemäß Gleichung (17) in Abhängigkeit der Verschiebung $d$ und des jeweiligen Symbolintervalls $n$ verwendet.

In einem nächsten Verfahrenschritt S20 werden die für eine jeweilige Verschiebung $d$ in einzelnen Symbolintervallen $n$ berechneten Metriken $\Lambda_n(d)$ über mehrere Symbolintervalle $n$ zur Ermittelung eines Erwartungswert $E\{\Lambda_n(d)\}$ gemittelt.

Aus den für die einzelnen Verschiebungen $d$ jeweils berechneten Erwartungswerten $E\{\Lambda_n(d)\}$ der Metrik $\Lambda_n(d)$ wird im abschließenden Verfahrenschritt S30 der maximale Erwartungswert $E\{\Lambda_n(\hat{d})\}$ und die zum maximalen Erwartungswert $E\{\Lambda_n(\hat{d})\}$ gehörige Verschiebung $\hat{d}$ als ganzzahliger Faktor m der gesuchten ganzzahligen Trägerfrequenzverschiebung $m \cdot \Delta f$ gemäß Gleichung (14) ermittelt.

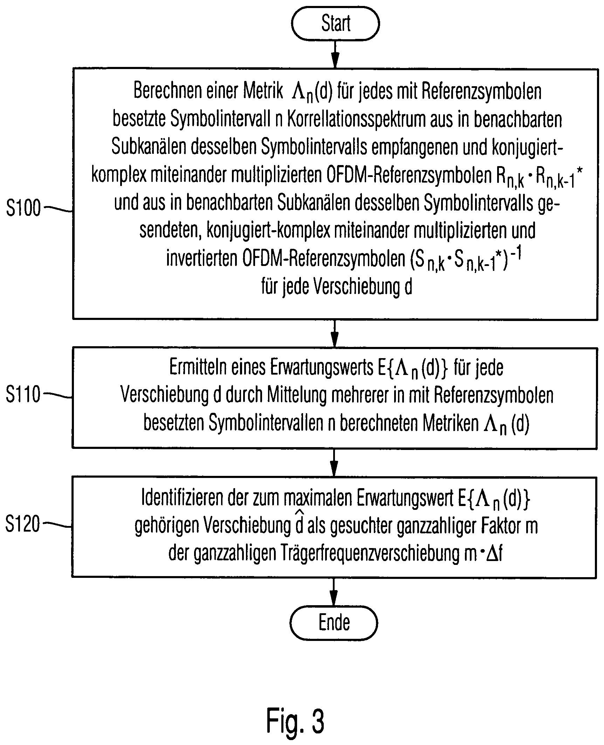

Beim erfindungsgemäßen Verfahren zur Ermittlung einer ganzzahligen Trägerfrequenzabweichung in einem phasen- und zusätzlich amplitudenmodulierten OFDM-Übertragungssystem mittels Referenzsymbolen entsprechend dem Flußdiagramm in Fig. 3 entsprechen die Verfahrenschritte S110 und S120 den Verfahrensschritten S20 und S30 des erfindungsgemäßen Verfahrens zur Ermittlung einer ganzzahligen Trägerfrequenzabweichung in einem reinen phasenmodulierten OFDM-Übertragungssystem mittels Referenzsymbolen gemäß Fig. 2.

Beim ersten Verfahrenschritt S100 werden in Abgrenzung zu einem reinen phasenmodulierten OFDM-Übertragungssystemen die für zwei benachbarte Subkanäle $k$ und $k$-1 jeweils konjugiert-komplex miteinander multiplizierten gesendeten OFDM-Referenzsymbole $S_{n,k} \cdot S_{n,k-1}^*$ invertiert. Anschließend werden die für zwei benachbarte Subkanäle

$k$ und $k$-1 jeweils konjugiert-komplex miteinander multiplizierten und invertierten gesendeten OFDM-Referenzsymbole $(S_{n,k} \cdot S_{n,k-1}^{*})^{-1}$ und die für zwei benachbarte Subkanäle $k$ und $k$-1 jeweils konjugiert-komplex miteinander multiplizierten empfangenen Symbolen $R_{n,k} \cdot R_{n,k-1}^{*}$ zur Berechnung eines als Metrik $\Lambda_n(d)$ dienenden Korrelationsspektrums gemäß Gleichung (21) in Abhängigkeit der Verschiebung $d$ und des jeweiligen Symbolintervalls $n$ verwendet.

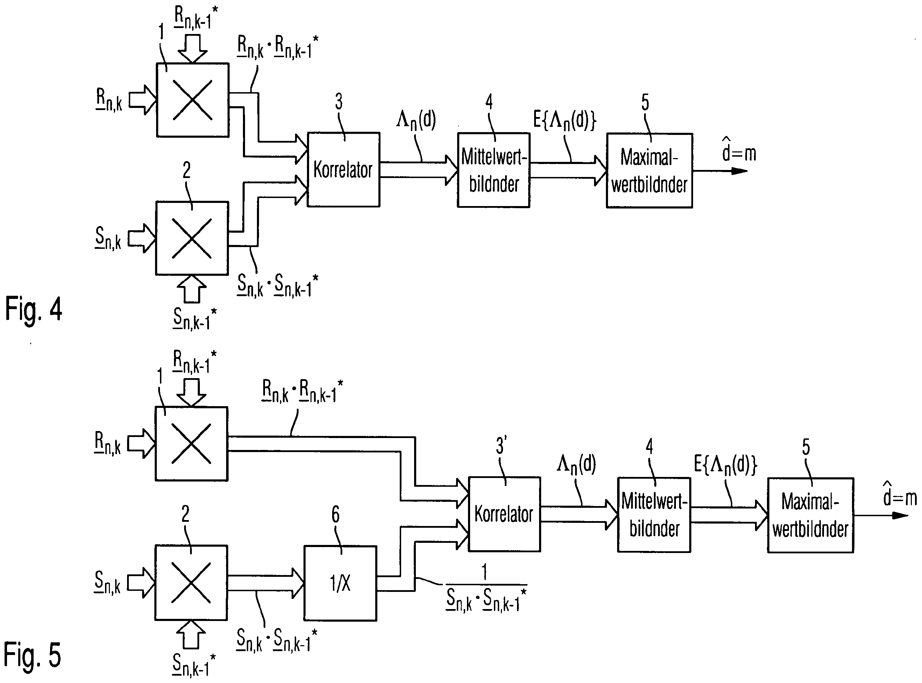

Die erfindungsgemäße Vorrichtung zur Ermittlung einer ganzzahligen Trägerfrequenzabweichung in einem rein phasenmodulierten OFDM-Übertragungssystem mittels Referenzsymbolen besteht entsprechend dem Blockdiagramm in Fig. 4 aus einem ersten Multiplizierer 1 zur konjugiert-komplexen Multiplikation der in jeweils benachbarten Subkanälen $k$ und $k$-1 und in für OFDM-Referenzsymbole vorgesehenen Symbolintervallen $n$ jeweils gesendeten OFDM-Referenzsymbolen $S_{n,k}$ und $S_{n,k-1}$. In einem zweiten Multiplizierer 2 werden analog die in jeweils benachbarten Subkanälen $k$ und $k$-1 und in für OFDM-Referenzsymbole vorgesehenen Symbolintervallen $n$ jeweils empfangenen OFDM-Referenzsymbolen $R_{n,k}$ und $R_{n,k-1}$ jeweils konjugiert-komplex miteinander multipliziert.

Die für die einzelnen benachbarten Subkanäle $k$ und $k$-1 und für die einzelnen Symbolintervalle $n$ jeweils konjugiert-komplex miteinander multiplizierten, gesendeten bzw. empfangenen OFDM-Referenzsymbole $S_{n,k} \cdot S_{n,k-1}^{*}$ und $R_{n,k} \cdot R_{n,k-1}^{*}$ werden in einem anschließenden Korrelator 3 zur Berechnung von einzelnen, jeweils von einer ganzzahligen Verschiebung $d$ und vom jeweiligen Symbolintervall $n$ abhängigen und als Metriken $\Lambda_n(d)$ jeweils die Korrelationsspektren benutzt.

An den Korrelator 3 schließt sich ein Mittelwertbildner 4 an, der einen Erwartungswert $E\{\Lambda_n(d)\}$ für die von der Verschiebung $d$ abhängige Metrik $\Lambda_n(d)$ durch Mittelung der im Korrelator 3 in den einzelnen Symbolintervallen n für die jeweilige Verschiebung $d$ jeweils berechneten Metriken $\Lambda_n(d)$ ermittelt.

Dem Mittelwertbildner 4 folgt ein Maximalwertbildner 5, der aus allen für die einzelnen Verschiebungen $d$ im Mittelwertbildner 4 jeweils ermittelten Erwartungswerten $E\{\Lambda_n(d)\}$ den maximalen Erwartungswert $E\{\Lambda_n(\hat{d})\}$ und die zum maximalen Erwartungswert $E\{\Lambda_n(\hat{d})\}$ gehörige Verschiebung $\hat{d}$ als ganzzahligen Faktor $m$ der gesuchten ganzzahligen Trägerfrequenzverschiebung $m \cdot \Delta f$ bestimmt.

Das Ausführungsbeispiel der erfindungsgemäßen Vorrichtung zur Ermittlung einer ganzzahligen Trägerfrequenzabweichung in einem phasen- und zusätzlich amplitudenmodulierten OFDM-Übertragungssystem mittels Referenzsymbolen im Blockdiagramm der Fig. 5 unterscheidet sich von dem Ausführungsbeispiel der erfindungsgemäßen Vorrichtung zur Ermittlung einer ganzzahligen Trägerfrequenzabweichung in einem reinen phasenmodulierten OFDM-Übertragungssy-stemen mittels Referenzsymbolen in Fig. 4 einzig durch einen Invertierer 6 zwischen dem zweiten Multiplizierer 2 und dem Korrelator 3'. Der Invertierer 6 invertiert die im zweiten Multiplizierer 2 jeweils konjugiert-komplex miteinander multiplizierten, in benachbarten Subkanälen $k$ und $k$-1 und in den einzelnen Symbolintervallen $n$ jeweils gesendeten OFDM-Referenzsymbolen $S_{n,k} \cdot S_{n,k-1}^{*}$.

Der Korrelator 3' der erfindungsgemäßen Vorrichtung zur Ermittlung einer ganzzahligen Trägerfrequenzabweichung in einem phasen- und zusätzlich amplitudenmodulierten OFDM-Übertragungssystem mittels Referenzsymbolen berechnet aus den einzelnen, in benachbarten Subkanälen $k$ und $k$-1 und für die einzelnen Symbolintervalle $n$ jeweils konjugiertkomplex miteinander multiplizierten und invertierten gesendeten $(S_{n,k} \cdot S_{n,k-1}^{*})^{-1}$ und den einzelnen, in benachbarten Subkanälen $k$ und $k$-1 und für die einzelnen Symbolintervalle $n$ jeweils konjugiert-komplex miteinander multiplizierten empfangenen OFDM-Referenzsymbole $R_{n,k} \cdot R_{n,k-1}^{*}$ einzelne, jeweils von einer ganzzahligen Verschiebung $d$ und vom jeweiligen Symbolintervall $n$ abhängige und als Metriken $\Lambda_n(d)$ jeweils dienende Korrelationsspektren.

Die Erfindung ist nicht auf die dargestellten Ausführungsformen des erfindungsgemäßen Verfahrens und der erfindungsgemäßen Vorrichtung beschränkt. Alle beschriebenen und/oder gezeichneten Merkmale sind im Rahmen der Erfindung beliebig miteinander kombinierbar.

## Patentansprüche

**1.** Verfahren zur Ermittlung einer Trägerfrequenzabweichung $(m \cdot \Delta f)$ in Höhe eines ganzzahligen Vielfachen $(m)$ des Subträgerabstands $(\Delta f)$ in einem phasenmodulierten OFDM-Übertragungssystem mit in benachbarten Subkanälen $(k,$ k-1) eines Symbolintervalls $(n)$ jeweils gesendeten und zueinander unkorrelierten OFDM-Referenzsymbolen $(S_{n,k})$, mit folgenden Verfahrensschritten:

• für mehrere Symbolintervalle (n), Berechnen jeweils eines als Metrik $(\Lambda_n(d))$ dienenden und jeweils von einem ganzzahligen Verschiebungsfaktor $(d)$ abhängigen Korrelationsspektrums aus zwei, in benachbarten Subkanälen $(k,k$-1) eines Symbolintervalls $(n)$ empfangenen und konjugiert-komplex miteinander multiplizierten OFDM-Empfangssymbolen $(R_{n,k} \cdot R_{n,k-1}^{*})$ und aus zwei, in den benachbarten Subkanälen $(k,k$-1) des Symbolintervalls $(n)$ gesendeten und konjugiert-komplex miteinander multiplizierten OFDM-Referenzsymbolen $(S_{n,k} \cdot S_{n,k-1}^{*})$,

**gekennzeichnet durch** die folgenden Verfahrenschritte:

• Ermitteln eines Mittelwerts ($E\{\Lambda_n(d)\}$) aus den berechneten Korrelationspektren ($\Lambda_n(d)$) und
• Identifizieren des jeweils zum maximalen Mittelwert ($E\{\Lambda_n(\hat{d})\}$) gehörigen Verschiebungsfaktors ($\hat{d}$) als ganzzahliges Vielfaches ($m$) des Subträgerabstands ($\Delta f$) in der Trägerfrequenzabweichung ($m \cdot \Delta f$).

2. Verfahren zur Ermittlung einer Trägerfrequenzabweichung ($m \cdot \Delta f$) in Höhe eines ganzzahligen Vielfachen ($m$) des Subträgerabstands ($\Delta f$) in einem phasen- und amplitudenmodulierten OFDM-Übertragungssystem mit in benachbarten Subkanälen ($k$, k-1) eines Symbolintervalls ($n$) jeweils gesendeten und zueinander unkorrelierten OFDM-Referenzsymbolen ($S_{n,k}$), mit folgenden Verfahrensschritten:

• für mehrere Symbolintervalle ($n$), Berechnen jeweils eines als Metrik ($\Lambda_n(d)$) dienenden und jeweils von einem ganzzahligen Verschiebungsfaktor ($d$) abhängigen Korrelationsspektrums aus zwei, in benachbarten Subkanälen ($k,k$-1) eines Symbolintervalls ($n$) empfangenen und konjugiert-komplex miteinander multiplizierten OFDM-Empfangssymbolen ($R_{n,k} \cdot R_{n,k-1}{}^*$) und aus zwei, in den benachbarten Subkanälen ($k,k$-1) des Symbolintervalls ($n$) gesendeten und konjugiert-komplex miteinander multiplizierten und invertierten OFDM-Referenzsymbolen (($S_{n,k} \cdot S_{n,k-1}{}^*)^{-1}$),

**gekennzeichnet durch** die folgenden Verfahrensschritte:

• Ermitteln eines Mittelwerts ($E\{\Lambda_n(d)\}$) aus den berechneten Korrelationsspektren ($\Lambda_n(d)$) und
• Identifizieren des jeweils zum maximalen Mittelwert ($E\{\Lambda_n(\hat{d})\}$) gehörigen Verschiebungsfaktors ($\hat{d}$) als ganzzahliges Vielfaches ($m$) des Subträgerabstands ($\Delta f$) in der Trägerfrequenzabweichung ($m \cdot \Delta f$).

3. Vorrichtung zur Ermittlung einer Trägerfrequenzabweichung ($m \cdot \Delta f$) in Höhe eines ganzzahligen Vielfachen ($m$) des Subträgerabstands ($\Delta f$) in einem phasenmodulierten OFDM-Übertragungssystem mit in benachbarten Subkanälen (k, k-1) eines Symbolintervalls ($n$) jeweils gesendeten und zueinander unkorrelierten OFDM-Referenzsymbolen ($S_{n,k}$), mit jeweils einem Multiplizierer (1, 2) zur konjugiertkomplexen Multiplikation von zwei in jeweils benachbarten Subkanälen ($k,k$-1) des Symbolintervalls ($n$) gesendeten OFDM-Referenzsymbolen ($S_{n,k} \cdot S_{n,k-1}{}^*$) und von zwei in jeweils benachbarten Subkanälen ($k,k$-1) des Symbolintervalls ($n$) empfangenen OFDM-Empfangssymbolen ($R_{n,k} \cdot R_{n,k-1}{}^*$), einem Korrelator (3) zur Ermittlung verschiedener als Metrik ($\Lambda_n(d)$) dienender und jeweils von einem ganzzahligen Verschiebungsfaktor ($d$) abhängiger Korrelationsspektren aus den konjugiert-komplex multiplizierten, gesendeten OFDM-Referenzsymbolen ($S_{n,k} \cdot S_{n,k-1}{}^*$) und den konjugiert-komplex multiplizierten empfangenen OFDM-Empfangssymbolen ($R_{n,k} \cdot R_{n,k-1}{}^*$), **gekennzeichnet durch** einen Mittelwertbildner (4) zur Ermitteln eines Mittelswerts ($E\{\Lambda_n(d)\}$) über in mehreren Symbolintervallen ($n$) jeweils ermittelten Korrelationsspektren ($\Lambda_n(d)$) und einen Maximalwertbildner (5) zur Ermittlung des jeweils zum maximalen Mittelwert ($E\{\Lambda_n(\hat{d})\}$) gehörigen ganzzahligen Faktors ($\hat{d}$).

4. Vorrichtung zur Ermittlung einer Trägerfrequenzabweichung ($m \cdot \Delta f$) in Höhe eines ganzzahligen Vielfachen ($m$) des Subträgerabstands ($\Delta f$) in einem phasen- und amplitudenmodulierten OFDM-Übertragungssystem mit in benachbarten Subkanälen ($k$, k-1) eines Symbolintervalls ($n$) jeweils gesendeten und zueinander unkorrelierten OFDM-Referenzsymbolen ($S_{n,k}$), mit jeweils einem Multiplizierer (1, 2) zur konjugiertkomplexen Multiplikation von zwei in jeweils benachbarten Subkanälen ($k,k$-1) des Symbolintervalls ($n$) gesendeten OFDM-Referenzsymbolen ($S_{n,k} \cdot S_{n,k-1}{}^*$) und von zwei in jeweils benachbarten Subkanälen ($k,k$-1) des Symbolintervalls ($n$) empfangenen OFDM-Empfangssymbolen ($R_{n,k} \cdot R_{n,k-1}{}^*$), einem Invertierer (6) zur Invertierung der konjugiertkomplex multiplizierten, gesendeten OFDM-Referenzsymbol ($S_{n,k} \cdot S_{n,k-1}{}^*$), einem Korrelator (3') zur Ermittlung verschiedener als Metrik ($\Lambda_n(d)$) dienender und jeweils von einem ganzzahligen Verschiebungsfaktor ($d$) abhängiger Korrelationsspektren aus den konjugiert-komplex multiplizierten und invertierten gesendeten OFDM-Referenzsymbolen ($S_{n,k} \cdot S_{n,k-1}{}^*$) und den konjugiert-komplex multiplizierten empfangenen OFDM-Empfangssymbolen ($R_{n,k} \cdot R_{n,k-1}{}^*$), **gekennzeichnet durch** einen Mittelwertbildner (4) zum Ermitteln eines Mittelwerts ($E\{\Lambda_n(d)\}$) über in mehreren Symbolintervallen ($n$) jeweils ermittelten Korrelationsspektren ($\Lambda_n(d)$) und einen Maximalwertbildner (5) zur Ermittlung des jeweils zum maximalen Mittelwert ($E\{\Lambda_n(\hat{d})\}$) gehörigen ganzzahligen Faktors ($\hat{d}$).

**Claims**

1. Method for determining a carrier frequency deviation ($m \cdot \Delta f$) in the form of an integer multiple ($m$) of the sub-carrier spacing ($\Delta f$) in a phase-modulated OFDM transmission system with mutually uncorrelated OFDM reference symbols ($S_{n,k}$) transmitted in each case in adjacent sub-channels ($k$ , k-1) of a symbol interval ($n$), with the following method steps:

• for a plurality of symbol intervals ($n$) calculation in each case of a correlation spectrum serving as a metric ($\Lambda_n(d)$) and depending in each case on an integer displacement factor ($d$) from two OFDM reception symbols ($R_{n,k} \cdot R_{n,k-1}^*$) received in adjacent sub-channels ($k,k$-1) of a symbol interval ($n$) and subjected to complex conjugate multiplication with one another and from two OFDM reference symbols ($S_{n,k} \cdot S_{n,k-1}^*$) transmitted in the adjacent sub-channels ($k,k$-1) of the symbol interval ($n$) and subjected to complex conjugate multiplication with one another,

**characterised by** the following method steps:

• determination of a mean value ($E\{\Lambda_n(d)\}$) from the calculated correlation spectra ($\Lambda_n(d)$) and
• identification of the displacement factor ($\hat{d}$) associated with the maximum mean value ($E\{\Lambda_n(\hat{d})\}$) in each case in the form of an integer multiple ($m$) of the sub-carrier spacing ($\Delta f$) in the carrier frequency deviation ($m \cdot \Delta f$).

2. Method for determining a carrier frequency deviation ($m \cdot \Delta f$) in the form of an integer multiple ($m$) of the sub-carrier spacing ($\Delta f$) in a phase-modulated and amplitude-modulated OFDM transmission system with mutually uncorrelated OFDM reference symbols ($S_{n,k}$) transmitted in each case in adjacent sub-channels ($k$, k-1) of a symbol interval ($n$), with the following method steps:

• for a plurality of symbol intervals ($n$) calculation of in each case a correlation spectrum serving as a metric ($\Lambda_n(d)$) and depending in each case on an integer displacement factor ($d$) from two OFDM reception symbols ($R_{n,k} \cdot R_{n,k-1}^*$) received in adjacent sub-channels ($k,k$-1) of a symbol interval ($n$) and subjected to complex conjugate multiplication with one another and from two OFDM reference symbols ( $(S_{n,k} \cdot S_{n,k-1}^*)^{-1}$) transmitted in the adjacent sub-channels ($k,k$-1) of the symbol interval ($n$) and subjected to complex conjugate multiplication with one another and inverted,

**characterised by** the following method steps:

• determination of a mean value ($E\{\Lambda_n(d)\}$) from the calculated correlation spectra ($\Lambda_n(d)$) and
• identification of the displacement factor ($\hat{d}$) associated with the maximum mean value ($E\{\Lambda_n(\hat{d})\}$) in each case in the form of an integer multiple ($m$) of the sub-carrier spacing ($\Delta f$) in the carrier frequency deviation ($m \cdot \Delta f$).

3. Device for determining a carrier frequency deviation ($m \cdot \Delta f$) in the form of an integer multiple ($m$) of the sub-carrier spacing ($\Delta f$) in a phase-modulated OFDM transmission system with mutually uncorrelated OFDM reference symbols ($S_{n,k}$) transmitted in each case in adjacent sub-channels ($k$, k-1) of a symbol interval ($n$), with in each case
a multiplier (1,2) for the complex conjugate multiplication of two OFDM reference symbols ($S_{n,k} \cdot S_{n,k-1}^*$) transmitted in each case in adjacent sub-channels ($k$, k-1) of the symbol interval ($n$) and of two OFDM reception symbols ($R_{n,k} \cdot R_{n,k-1}^*$) received in each case in adjacent sub-channels ($k,k$-1) of the symbol interval ($n$),
a correlator (3) for determining different correlation spectra serving as a metric ( $\Lambda_n(d)$) and depending in each case on an integer displacement factor ($d$) from the transmitted OFDM reference symbols ($S_{n,k} \cdot S_{n,k-1}^*$) subjected to complex conjugate multiplication and the received OFDM reception symbols ($R_{n,k} \cdot R_{n,k-1}^*$) subjected to complex conjugate multiplication,
**characterised by**
a mean value forming element (4) for determining a mean value ($E\{\Lambda_n(d)\}$) from correlation spectra ($\Lambda_n(d)$ determined in each case in a plurality of symbol intervals ( $n$) and
a maximum value forming element (5) for determining the integer factor ($\hat{d}$) associated with the maximum mean value ($E\{\Lambda_n(\hat{d})\}$).

4. Device for determining a carrier frequency deviation ($m \cdot \Delta f$) in the form of an integer multiple ($m$) of the sub-carrier spacing ($\Delta f$) in a phase-modulated and amplitude-modulated OFDM transmission system with mutually uncorrelated OFDM reference symbols ($S_{n,k}$) transmitted in each case in adjacent sub-channels ($k$, k-1) of a symbol interval ($n$), with in each case
a multiplier (1,2) for the complex conjugate multiplication of two OFDM reference symbols ($S_{n,k} \cdot S_{n,k-1}^*$) transmitted in each case in adjacent sub-channels ($k$, $k$-1) of the symbol interval ($n$) and of two OFDM reception symbols ($R_{n,k} \cdot R_{n,k-1}^*$) received in each case in adjacent sub-channels ($k,k$-1) of the symbol interval ($n$),
an inverter (6) for inverting the transmitted OFDM reference symbol ($S_{n,k} \cdot S_{n,k-1}^*$) subjected to complex conjugate multiplication,
a correlator (3') for determining different correlation spectra serving as a metric ( $\Lambda_n(d)$) and depending in each case on an integer displacement factor ($d$) from the transmitted OFDM reference symbols ($S_{n,k} \cdot S_{n,k-1}^*$) subjected to complex conjugate multiplication and inverted and the received OFDM reception symbols ($R_{n,k} \cdot R_{n,k-1}{}^*$) subjected to complex conjugate multiplication,

**characterised by**

a mean value forming element (4) for determining a mean value ($E\{\Lambda_n(d)\}$) from correlation spectra ($\Lambda_n(d)$ determined in each case in a plurality of symbol intervals ($n$) and

a maximum value forming element (5) for determining the integer factor ($d$) associated with the maximum mean value ($E\{\Lambda_n(\hat{d})\}$) in each case.

**Revendications**

1. Procédé de détermination d'une déviation de fréquence porteuse ($m \cdot \Delta f$) représentant un multiple entier ($m$) de l'espacement de sous-porteuse ($\Delta f$) dans un système de transmission OFDM à modulation de phase avec des symboles de référence OFDM ($S_{n,k}$) adressés et non corrélés entre eux dans des sous-canaux contigus ($k$, $k$-1) d'un intervalle de symbole ($n$), comprenant les étapes suivantes :

   • pour plusieurs intervalles de symbole ($n$), calcul d'un spectre de corrélation servant de métrique ($\Lambda_n(d)$) et fonction d'un facteur de décalage ($d$) entier, à partir de deux symboles de réception OFDM ($R_{n,k} \cdot R_{n,k-1}{}^*$) reçus dans des sous-canaux contigus ($k$, $k$-1) d'un intervalle de symbole ($n$) et multipliés entre eux par leur conjugué complexe, et de deux symboles de référence OFDM ($S_{n,k} \cdot S_{n,k-1}{}^*$) adressés dans les sous-canaux contigus ($k$, $k$-1) de l'intervalle de symbole ($n$) et multipliés entre eux par leur conjugué complexe,

   **caractérisé par** les étapes suivantes :

   • détermination d'une valeur moyenne ($E\{\Lambda_n(d)\}$) à partir des spectres de corrélation ($\Lambda_n(d)$) calculés, et
   • identification du facteur de décalage ($\hat{d}$) relevant de la valeur moyenne maximale ($E\{\Lambda_n(\hat{d})\}$) en tant que multiple entier ($m$) de l'espacement de sous-porteuse ($\Delta f$) dans la déviation de fréquence porteuse ($m \cdot \Delta f$).

2. Procédé de détermination d'une déviation de fréquence porteuse ($m \cdot \Delta f$) représentant un multiple entier ($m$) de l'espacement de sous-porteuse ($\Delta f$) dans un système de transmission OFDM à modulation de phase et d'amplitude avec des symboles de référence OFDM ($S_{n,k}$) adressés et non corrélés entre eux dans des sous-canaux contigus ($k$, $k$-1) d'un intervalle de symbole ($n$), comprenant les étapes suivantes :

   • pour plusieurs intervalles de symbole ($n$), calcul d'un spectre de corrélation servant de métrique ($\Lambda_n(d)$) et fonction d'un facteur de décalage ($d$) entier, à partir de deux symboles de réception OFDM ($R_{n,k} \cdot R_{n,k-1}{}^*$) reçus dans des sous-canaux contigus ($k$, $k$-1) d'un intervalle de symbole ($n$) et multipliés entre eux par leur conjugué complexe, et de deux symboles de référence OFDM (($S_{n,k} \cdot S_{n,k-1}{}^*$)$^{-1}$) adressés dans les sous-canaux contigus ($k$, $k$-1) de l'intervalle de symbole ($n$) et multipliés entre eux par leur conjugué complexe, et inversés,

   **caractérisé par** les étapes suivantes :

   • détermination d'une valeur moyenne ($E\{\Lambda_n(d)\}$) à partir des spectres de corrélation ($\Lambda_n(d)$) calculés, et
   • identification du facteur de décalage ($\hat{d}$) relevant de la valeur moyenne maximale ($E\{\Lambda_n(\hat{d})\}$) en tant que multiple entier ($m$) de l'espacement de sous-porteuse ($\Delta f$) dans la déviation de fréquence porteuse ($m \cdot \Delta f$).

3. Dispositif pour la détermination d'une déviation de fréquence porteuse ($m \cdot \Delta f$) représentant un multiple entier ($m$) de l'espacement de sous-porteuse ($\Delta f$) dans un système de transmission OFDM à modulation de phase, avec des symboles de référence OFDM ($S_{n,k}$) adressés et non corrélés entre eux dans des sous-canaux contigus ($k$, $k$-1) d'un intervalle de symbole ($n$), avec

   un multiplicateur (1, 2) pour la multiplication par leur conjugué complexe de deux symboles de référence OFDM ($S_{n,k} \cdot S_{n,k-1}{}^*$) adressés dans des sous-canaux contigus ($k$, $k$-1) de l'intervalle de symbole ($n$) et de deux symboles de réception OFDM ($R_{n,k} \cdot R_{n,k-1}{}^*$) reçus dans des sous-canaux contigus ($k$, $k$-1) d'un intervalle de symbole ($n$),

   un corrélateur (3) pour la détermination de différents spectres de corrélation servant de métrique ($\Lambda_n(d)$) et fonction d'un facteur de décalage ($d$) entier, à partir des symboles de référence OFDM ($S_{n,k} \cdot S_{n,k-1}{}^*$) adressés et multipliés par leur conjugué complexe et des symboles de réception OFDM ($R_{n,k} \cdot R_{n,k-1}{}^*$) reçus et multipliés par leur conjugué complexe,

   **caractérisé par**

   un formateur de valeur moyenne (4) pour la détermination d'une valeur moyenne ($E\{\Lambda_n(d)\}$) des spectres de corré-

lation ($\Lambda_n(d)$) déterminés dans plusieurs intervalles de symbole ($n$), et
un formateur de valeur maximale (5) pour la détermination du facteur entier ($\hat{d}$) relevant de la valeur moyenne maximale ($E\{\Lambda_n(\hat{d})\}$).

4. Dispositif pour la détermination d'une déviation de fréquence porteuse ($m \cdot \Delta f$) représentant un multiple entier ($m$) de l'espacement de sous-porteuse ($\Delta f$) dans un système de transmission OFDM à modulation de phase et d'amplitude avec des symboles de référence OFDM ($S_{n,k}$) adressés et non corrélés entre eux dans des sous-canaux contigus ($k$, $k$-1) d'un intervalle de symbole ($n$), avec

un multiplicateur (1, 2) pour la multiplication par leur conjugué complexe de deux symboles de référence OFDM ($S_{n,k} \cdot S_{n,k-1}*$) adressés dans des sous-canaux contigus ($k$, $k$-1) de l'intervalle de symbole ($n$) et de deux symboles de réception OFDM ($R_{n,k} \cdot R_{n,k-1}*$) reçus dans des sous-canaux contigus ($k$, $k$-1) d'un intervalle de symbole ($n$),

un inverseur (6) pour l'inversion des symboles de référence OFDM ($S_{n,k} \cdot S_{n,k-1}*$) adressés et multipliés par leur conjugué complexe,

un corrélateur (3') pour la détermination de différents spectres de corrélation servant de métrique ($\Lambda_n(d)$) et fonction d'un facteur de décalage ($d$) entier, à partir des symboles de référence OFDM ($S_{n,k} \cdot S_{n,k-1}*$) adressés et multipliés par leur conjugué complexe et des symboles de réception OFDM ($R_{n,k} \cdot R_{n,k-1}*$) reçus et multipliés par leur conjugué complexe,

**caractérisé par**

un formateur de valeur moyenne (4) pour la détermination d'une valeur moyenne ($E\{\Lambda_n(d)\}$) des spectres de corrélation ($\Lambda_n(d)$) déterminés dans plusieurs intervalles de symbole ($n$), et

un formateur de valeur maximale (5) pour la détermination du facteur entier ($\hat{d}$) relevant de la valeur moyenne maximale ($E\{\Lambda_n(\hat{d})\}$).

Referenzsymbol

SubKanal

Nutzdatensymbol

Symbolintervall

## Fig. 1

Start

$S10$ — Berechnen einer Metrik $\Lambda_n(d)$ für jedes mit Referenzsymbolen besetzte Symbolintervall n Korrellationsspektrum aus in benachbarten Subkanälen desselben Symbolintervalls empfangenen und konjugiert-komplex miteinander multiplizierten OFDM-Referenzsymbolen $R_{n,k} \cdot R_{n,k-1}^*$ und aus in benachbarten Subkanälen desselben Symbolintervalls gesendeten und konjugiert-komplex miteinander multiplizierten OFDM-Referenzsymbolen $S_{n,k} \cdot S_{n,k-1}^*$ für jede Verschiebung d

$S20$ — Ermitteln eines Erwartungswerts $E\{\Lambda_n(d)\}$ für jede Verschiebung d durch Mittelung mehrerer in mit Referenzsymbolen besetzten Symbolintervallen n berechneten Metriken $\Lambda_n(d)$

$S30$ — Identifizieren der zum maximalen Erwartungswert $E\{\Lambda_n(d)\}$ gehörigen Verschiebung $\hat{d}$ als gesuchter ganzzahliger Faktor m der ganzzahligen Trägerfrequenzverschiebung $m \cdot \Delta f$

Ende

## Fig. 2

Start

S100 — Berechnen einer Metrik $\Lambda_n(d)$ für jedes mit Referenzsymbolen besetzte Symbolintervall n Korrellationsspektrum aus in benachbarten Subkanälen desselben Symbolintervalls empfangenen und konjugiert-komplex miteinander multiplizierten OFDM-Referenzsymbolen $R_{n,k} \cdot R_{n,k-1}^*$ und aus in benachbarten Subkanälen desselben Symbolintervalls gesendeten, konjugiert-komplex miteinander multiplizierten und invertierten OFDM-Referenzsymbolen $(S_{n,k} \cdot S_{n,k-1}^*)^{-1}$ für jede Verschiebung d

S110 — Ermitteln eines Erwartungswerts $E\{\Lambda_n(d)\}$ für jede Verschiebung d durch Mittelung mehrerer in mit Referenzsymbolen besetzten Symbolintervallen n berechneten Metriken $\Lambda_n(d)$

S120 — Identifizieren der zum maximalen Erwartungswert $E\{\Lambda_n(d)\}$ gehörigen Verschiebung $\hat{d}$ als gesuchter ganzzahliger Faktor m der ganzzahligen Trägerfrequenzverschiebung $m \cdot \Delta f$

Ende

Fig. 3

Fig. 4

Fig. 5

EP 1 993 250 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7133479 B2

**In der Beschreibung aufgeführte Nicht-Patentliteratur**

- OFDM Integer Frequency Offset Estimator in Rapidly Time-Varying Channels. **VON EU-SUK SHIM et al.** COMMUNICATIONS. ASIA-PACIFIC CONFERENCE ON, IEEE, 01. August 2006